(19) Europäisches Patentamt
European Patent Office
Office européen des brevets

(11) **EP 4 559 953 A1**

(12) **EUROPEAN PATENT APPLICATION**

(43) Date of publication:
**28.05.2025 Bulletin 2025/22**

(21) Application number: **23307020.0**

(22) Date of filing: **21.11.2023**

(51) International Patent Classification (IPC):
*C08G 69/34* (2006.01)     *B01D 71/56* (2006.01)
*C08G 69/36* (2006.01)     *C08G 69/40* (2006.01)
*C08L 77/08* (2006.01)

(52) Cooperative Patent Classification (CPC):
**C08G 69/40; B01D 69/02; B01D 71/56;
B01D 71/80; C08G 69/34; C08G 69/36;
C08L 77/08;** B01D 67/0009; B01D 2325/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Arkema France
92800 Puteaux (FR)**
• **Fundación Tecnalia Research and Innovation
20009 Donostia-San Sebastian (ES)**
• **Universiteit Maastricht
6211 LK Maastricht (NL)**

(72) Inventors:
• **PINEAU, Quentin
27470 Serquigny (FR)**
• **DAVID, Oana Cristina
E- 20009 Donostia - San Sebastián (ES)**
• **BENAVIDES, Miren Etxeberria
E- 20009 Donostia - San Sebastián (ES)**
• **OTANO, Sara Miguel
E- 20009 Donostia - San Sebastián (ES)**
• **BERNAERTS, Katrien V.
6229EV Maastricht (NL)**
• **SLECZKOWSKI, Marcin
6229EV Maastricht (NL)**

(74) Representative: **Bandpay & Greuter
11 rue Christophe Colomb
75008 Paris (FR)**

(54) **COPOLYMERS WITH POLYAMIDE BLOCKS AND FLEXIBLE BLOCKS**

(57) The present invention relates to a copolymer containing semi-crystalline polyamide blocks and flexible blocks, wherein:
- the semi-crystalline polyamide blocks contain from 30 to 75% by weight, preferably from 30 to 70% by weight of aliphatic dicarboxylic acid and/or diamine comprising 36 carbon atoms, relative to the total weight of polyamide blocks,
- the flexible blocks comprise blocks derived from polyethylene glycol and,
- the melting point of the copolymer of the invention is equal to or higher than 80°C, preferably higher than 80°C.

The present invention concerns a membrane for gas separation, comprising the copolymer and its preparation process.

EP 4 559 953 A1

## Description

### FIELD OF THE INVENTION

The present invention relates to a copolymer containing semi-crystalline polyamide blocks and flexible blocks, to a process for preparing such a copolymer and also to a membrane for gas separation formed from this copolymer.

### TECHNICAL BACKGROUND

Greenhouse gas emissions and their effects on global warming have become a major concern. Various technologies have been developed to recover the gases responsible for the greenhouse effect, such as carbon dioxide ($CO_2$) and methane ($CH_4$). Among these, gas separation membranes are under development. Gas separation membranes can also be used for many other applications, for example for the purification of natural gas or in new enthalpy heat exchangers.

Currently, polymeric materials are dominant in the market for gas separation applications. For example, copolymers containing polyamide blocks and polyether blocks (also known as PEBAs) have shown good selectivity of $CO_2$ over other light gases.

WO 2018/222255 describes a gas separation process using a membrane comprising a crosslinked mixture of a polyetheramide copolymer and an acrylate-terminated polyethylene glycol.

US 2022/0315701 describes a copolymer containing rigid polyamide blocks and flexible blocks including, relative to the total weight of the copolymer, from 55% to 90% by weight of flexible blocks, and from 10% to 45% by weight of polyamide blocks.

However, these copolymers tend to exhibit poor dissolution in solvents, imposing limitations on their application or processing, such as solvent casting for membrane or film fabrication.

In addition, these copolymers have relatively low melting points, which further complicates their application or processing for membrane or film fabrication. Indeed, copolymers with low melting points could lead to pore collapse during the drying process of the membrane.

There is thus a need to provide a copolymer that facilitates and simplifies the preparation of a gas separation membrane while maintaining good gas permeability and selectivity in the resulting membrane.

### SUMMARY OF THE INVENTION

The invention firstly relates to a copolymer containing semi-crystalline polyamide blocks and flexible blocks, wherein:

- the semi-crystalline polyamide blocks contain from 30 to 75% by weight, preferably from 30 to 70% by weight of aliphatic dicarboxylic acid and/or diamine comprising 36 carbon atoms, relative to the total weight of polyamide blocks,
- the flexible blocks comprise blocks derived from polyethylene glycol and,
- the melting point of the copolymer of the invention is equal to or higher than 80°C, preferably higher than 80°C.

According to some embodiments, the polyamide blocks comprise a unit X.36 or a unit 36.Y, wherein:

- X designates a linear or branched aliphatic, cycloaliphatic or aromatic diamine containing x carbon atoms,
- 36 designates an aliphatic dicarboxylic acid or an aliphatic diamine comprising 36 carbon atoms, and
- Y designates a linear or branched aliphatic, cycloaliphatic or aromatic dicarboxylic acid containing y carbon atoms.

According to some embodiments, the aliphatic dicarboxylic acid and/or diamine comprising 36 carbon atoms is a chain limiter of the semi-crystalline polyamide blocks.

According to some embodiments, the polyamide blocks comprises unit of PA 6, PA 11, PA 12, PA 536, PA 1036, PA 636, PA 1136, PA 1236, PA 366, PA 11/1036, PA 1012/1036, PA 1010/1036, PA 610/636, PA 612/636, PA 613/636, PA 69/636.

According to some embodiments, the weight proportion of the polyamide blocks is of from 15 to 60%, preferably from 20 to 50%, more preferably 30 to 50%, relative to the total weight of the copolymer, and the weight proportion of the flexible blocks is of from 40 to 85%, preferably from 30 to 60%, more preferably from 35 to 60%, relative to the total weight of the copolymer.

According to some embodiments, the number-average molecular weight of the polyamide blocks is from 400 to 20 000 g/mol, preferably 500 to 10 000 g/mol, more preferably 600 to 2500 g/mol, and the number-average molecular weight of the flexible blocks is from 200 to 6000 g/mol, preferably 500 to 3000 g/mol, more preferably 600 to 2000 g/mol.

The invention secondly relates to a composition, comprising:

- at least one copolymer as defined above; and
- at least one additive selected from coloring agents, UV stabilizers, anti-aging agents, antioxidants, fluidizing agents, anti-abrasion agents, mold-release agents, stabilizers, plasticizers, impact modifiers, surfactants, brighteners, fillers, fibers, waxes and mixtures thereof.

The invention further relates to the use of the copolymer as defined above or the composition as defined above as a membrane for gas separation.

The invention deals with a membrane for gas separation, comprising the copolymer as defined above or the composition as defined above.

According to some embodiments, the membrane has a thickness of from 0.05 to 500 $\mu$m, preferably 0.1 to 250 $\mu$m, more preferably a thickness of less than 20 $\mu$m, and even more preferably a thickness of less than 10 $\mu$m.

The invention further relates to a process for preparing the membrane, comprising the following steps of:

- supplying the copolymer defined above or the composition defined above,
- dissolving the copolymer or the composition in a solvent to form a solution,
- depositing the solution on a substrate, and
- evaporating off the solvent.

The invention further relates to a process for preparing the membrane as defined above, comprising the following steps of:

- supplying a polymer solution comprising the copolymer as defined above or the composition as defined above dissolved in a solvent,
- -supplying a bore fluid,
- co-extruding the polymer solution and the bore fluid downwardly into a coagulation bath, and
- recovering the membrane solidified in the coagulation bath,
- drying the recovered membrane by solvent exchange or by lyophilization.

The present invention meets the need expressed above. More particularly, the present invention provides a copolymer which facilitates its processing for the preparation of a gas separation membrane, said membranes having high gas selectivity and permeability. Said membrane also shows, inter alia, high selectivity toward carbon dioxide relative to other light gases.

This is accomplished by means of a copolymer comprising polyamide blocks and flexible blocks, said polyamide blocks comprising a particular proportion of dimer fatty acid or dimer fatty diamine comprising 36 carbon atoms.

The inventors have surprisingly found that the presence of such dimer fatty acid or dimer fatty diamine, either as a chain limiter or as a component of a monomer unit, can disrupt the crystalline structure of the copolymer. As a result, the copolymer's solubility in solvents used for its membrane fabrication process is improved while the copolymer remains insoluble to reagents such as washing solutions.

Furthermore, the melting point of the copolymer of equal to or higher than 80°C can prevent or at least minimize pore collapse upon drying during membrane fabrication, thereby further facilitating its processability into membranes.

According to certain particular embodiments, the invention also has one or preferably several of the advantageous features listed below: improved $CO_2$ selectivity over $N_2$ or $H_2$.

## DETAILED DESCRIPTION

The invention is now described in greater detail and in a nonlimiting manner in the description that follows.

The invention relates to a copolymer containing polyamide blocks and flexible blocks. These copolymers are thermoplastic elastomer (TPE) polymers comprising blocks that are rigid (or hard, with rather thermoplastic behavior) and blocks that are flexible (or soft, with rather elastomeric behavior).

The term "copolymer" refers to a polymer that is made up of more than one type of monomer, including a polymer derived from two monomers and a polymer derived from three or more monomers (also referred to as terpolymer).

The nomenclature used to define the polyamides is described in ISO standard 1874-1:2011 "Plastiques - Matériaux polyamides (PA) pour moulage et extrusion - Partie 1: Designation", in particular on page 3 (Tables 1 and 2) and is well known to the person skilled in the art.

Generally, polyamides comprise at least two identical or different repeating units, where these units are obtained from residues of an aminocarboxylic acid (also referred to as amino acid), a lactam or a dicarboxylic acid (also referred to as carboxylic diacid or diacid) and a diamine.

The polyamide blocks comprise at least one unit derived from polycondensation of at least one lactam; at least one aminocarboxylic acid; or at least one diamine and at least one dicarboxylic acid.

In the notation PA XY, X designates a linear or branched aliphatic, cycloaliphatic or aromatic diamine residue containing x carbon atoms (Cx diamine) and Y designates a linear or branched aliphatic, cycloaliphatic or aromatic diacid residue containing y carbon atoms (Cy diacid), as is conventional.

In the notation PA Z, Z represents the number of carbon atoms derived from amino acid residues or lactam residues.

The word "polyamide" covers both homopolyamides and copolyamides.

Unless otherwise indicated, all the percentages are weight (mass) percentages. It is further indicated that the expressions "between... and..." and "from... to..." used in the present description must be understood as including each of the indicated limits.

*Polyamide blocks*

The polyamide block is a semicrystalline polyamide. The term "semicrystalline polyamide" refers to a type of polyamide that exhibits a combination of crystalline and amorphous regions in its molecular structure.

The polyamide blocks contain from 30 to 75% by weight, preferably from 30 to 70% by weight, and particularly from 35 to 70% by weight of aliphatic dicarboxylic acid (also referred to as "diacid") and/or diamine comprising 36 carbon atoms, relative to the total weight of polyamide blocks. The weight proportion of the aliphatic dicarboxylic acid or diamine comprising 36 carbon atoms may be determined by DSC (differential scanning calorimetry) or NMR (nuclear magnetic resonance) analysis.

The aliphatic dicarboxylic acid or diamine comprising 36 carbon atoms may be a component of a monomer unit or a chain limiter of the polyamide blocks.

The term "chain limiter" refers to a molecule or functional group that terminates the growth of a polymer chain during its synthesis. The use of such chain limiters makes it possible to control the molecular weight and length of the polymer chains of the polyamide blocks.

Preferably, the polyamide blocks comprise a unit X.36 or a unit 36.Y, wherein:

- X designates a linear or branched aliphatic, cycloaliphatic or aromatic diamine containing x carbon atoms,
- 36 designates an aliphatic dicarboxylic acid or an aliphatic diamine comprising 36 carbon atoms, and
- Y designates a linear or branched aliphatic, cycloaliphatic or aromatic dicarboxylic acid containing y carbon atoms, or

the aliphatic dicarboxylic acid and/or diamine comprising 36 carbon atoms is a chain limiter of the semi-crystalline polyamide blocks.

The diacid containing 36 carbon atoms is sold under the trademark Pripol® 1009 by the company Cargill.

The diamine containing 36 carbon atoms is sold under the trademark Priamine® 1075 by the company Cargill.

The polyamide blocks of the copolymer according to the invention may comprise the following units :

- PA X36, PA X36/X1 Y1, PA X36/Z,
- PA 36Y, PA 36Y/X2Y2, PA 36Y/Z,
- PA XY with diamine or diacid comprising 36 carbon atoms as a chain limiter, PA X.Y/Z with diamine or diacid comprising 36 carbon atoms as chain limiter,
- PA Z with diamine or diacid comprising 36 carbon atoms as chain limiter,
- or the copolymer thereof, wherein:

with X being a linear or branched aliphatic, cycloaliphatic or aromatic diamine, in particular those containing from 2 to 36 carbon atoms, preferably those containing from 10 to 36 carbon atoms,

with Y being a linear or branched aliphatic, cycloaliphatic or aromatic dicarboxylic acid, in particular those containing from 4 to 36 carbon atoms, preferably those containing from 6 to 36 carbon atoms,

with Z being one or more $\alpha,\omega$-aminocarboxylic acids and/or from one or more lactams containing from 7 to 12 carbon atoms,

with X1 and X2 being a linear or branched aliphatic, cycloaliphatic or aromatic diamine, in particular those containing from 2 to 36 carbon atoms, preferably those containing from 10 to 36 carbon atoms,

with Y1 and Y2 being a linear or branched aliphatic, cycloaliphatic or aromatic dicarboxylic acid, in particular those containing from 4 to 36 carbon atoms, preferably those containing from 6 to 36 carbon atoms,

with X1 being a diamine identical or different from X and Y1 being a diacid different from 36,

with X2 being a diamine different from 36 and Y2 being a diacid identical or different from Y.

The polyamide blocks containing aliphatic dicarboxylic acid comprising 36 carbon atoms may be at least one of the following formulae : PA X36, PA X36/X1Y1, PA X36/Z.

In these formulae, X means a linear or branched aliphatic, cycloaliphatic or aromatic diamine, in particular those containing from 2 to 36 carbon atoms, preferably those containing from 10 to 36 carbon atoms.

Preferably, X may be chosen from butanediamine (x=4), pentanediamine (x=5), hexanediamine (x=6), heptanediamine (x=7), octanediamine (x=8), nonanediamine (x=9), decanediamine (x=10), undecanediamine (x=11), dodecanediamine (x=12), tridecanediamine (x=13), tetradecanediamine (x=14), hexadecanediamine (x=16), and octadecanediamine (x=18), the isomers of bis(4-aminocyclohexyl)methane (BACM), bis(3-methyl-4-aminocyclohexyl)methane (BMACM) and 2,2-bis(3-methyl-4-aminocyclohexyl)propane (BMACP), para-aminodicyclohexylmethane (PACM), isophoronediamine (IPDA), 2,6-bis(aminomethyl)norbornane (BAMN) and piperazine (Pip) and dimer diamines.

The formula PAX36/X1Y1 represents a copolyamide block with X1 being a diamine identical or different from X and Y1 being a diacid different from 36.

Y1 means a linear or branched aliphatic, cycloaliphatic or aromatic dicarboxylic acid, in particular those containing from 4 to 18 carbon atoms, preferably those containing from 6 to 18 carbon atoms.

Preferably, Y1 may be chosen from succinic acid ($y_1$=4), pentanedioic acid ($y_1$=5), adipic acid ($y_1$=6), heptanedioic acid ($y_1$=7), octanedioic acid ($y_1$=8), azelaic acid ($y_1$=9), sebacic acid ($y_1$=10), undecanedioic acid ($y_1$=11), dodecanedioic acid ($y_1$=12), brassylic acid ($y_1$=13), tetradecanedioic acid ($y_1$=14), hexadecanedioic acid ($y_1$=16), and octadecanedioic acid ($y_1$=18), terephthalic acid and isophthalic acid.

Advantageously, the unit X1Y1 may be chosen among PA 11, PA 12, PA 54, PA 59, PA 510, PA 512, PA 513, PA 514, PA 516, PA 518, PA 64, PA 69, PA 610, PA 612, PA 613, PA 614, PA 616, PA 618, PA 104, PA 109, PA 1010, PA 1012, PA 1013, PA 1014, PA 1016, PA 1018, PA 10T, PA 124, PA 129, PA 1210, PA 1212, PA 1213, PA 1214, PA 1216, PA 1218, PA 12T, PA 366.

The formula PA X36/Z represents a copolyamide block with Z being a lactam or an amino acid described above.

Preferably, examples of unit Z include pyrrolidinone (z = 4), 2-piperidinone (z = 5), enantholactam (z = 7), caprylolactam (z = 6), pelargolactam, decanolactam (z = 10), undecanolactam (z = 11), and lauryllactam (z = 12), 7-aminoheptanoic acid (z = 7), 10-aminodecanoic acid (denoted 10, z = 10), 11-aminoundecanoic acid (denoted 11, z = 11) and 12-aminododecanoic acid (denoted 12, z = 12).

The polyamide blocks containing aliphatic dicarboxylic acid comprising 36 carbon atoms may be of the following formulae : PA 36Y, PA 36Y/X2Y2, PA 36Y/Z.

In these formulae, Y means a linear or branched aliphatic, cycloaliphatic or aromatic diacid, in particular those containing from 2 to 36 carbon atoms, preferably those containing from 10 to 36 carbon atoms.

Preferably, Y may be chosen from succinic acid (y=4), pentanedioic acid (y=5), adipic acid (y=6), heptanedioic acid (y=7), octanedioic acid (y=8), azelaic acid (y=9), sebacic acid (y=10), undecanedioic acid (y=11), dodecanedioic acid (y=12), brassylic acid (y=13), tetradecanedioic acid (y=14), hexadecanedioic acid (y=16), and octadecanedioic acid (y=18), terephthalic acid and isophthalic acid, but also dimerized fatty acids.

The formula PA 36Y/X2Y2 represents a copolyamide block with X2 being a diamine different from 36 and Y2 being a diacid identical or different from Y.

X2 means a linear or branched aliphatic, cycloaliphatic or aromatic diamine, in particular those containing from 2 to 18 carbon atoms, preferably those containing from 10 to 18 carbon atoms.

Preferably, X2 may be chosen from butanediamine ($x_2$=4), pentanediamine ($x_2$=5), hexanediamine ($x_2$=6), heptanediamine ($x_2$=7), octanediamine ($x_2$=8), nonanediamine ($x_2$=9), decanediamine ($x_2$=10), undecanediamine ($x_2$=11), dodecanediamine ($x_2$=12), tridecanediamine ($x_2$=13), tetradecanediamine ($x_2$=14), hexadecanediamine ($x_2$=16), and octadecanediamine ($x_2$=18), the isomers of bis(4-aminocyclohexyl)methane (BACM), bis(3-methyl-4-aminocyclohexyl)methane (BMACM) and 2,2-bis(3-methyl-4-aminocyclohexyl)propane (BMACP), para-aminodicyclohexylmethane (PACM), isophoronediamine (IPDA), 2,6-bis(aminomethyl)norbornane (BAMN) and piperazine (Pip).

Advantageously, the unit X2Y2 may be chosen among PA 11, PA 12, PA 54, PA 59, PA 510, PA 512, PA 513, PA 514, PA 516, PA 518, PA 536, PA 64, PA 69, PA 610, PA 612, PA 613, PA 614, PA 616, PA6.18, PA 636, PA 104, PA 109, PA 1010, PA 1012, PA 1013, PA 1014, PA 1016, PA 1018, PA 1036, PA 10T, PA1136, PA 124, PA 129, PA 1210, PA 12.12, PA 12.13, PA 1214, PA 1216, PA 1218, PA 1236, PA 12T.

The formula PA36Y/Z represents a copolyamide block with Z being a lactam or an amino acid described above.

Preferably, examples of the unit Z include pyrrolidinone (z = 4), 2-piperidinone (z = 5), enantholactam (z = 7), caprylolactam (z = 6), pelargolactam, decanolactam (z = 10), undecanolactam (z = 11), and lauryllactam (z = 12), 7-aminoheptanoic acid (z = 7), 10-aminodecanoic acid (denoted 10, z = 10), 11-aminoundecanoic acid (denoted 11, z = 11) and 12-aminododecanoic acid (denoted 12, z = 12).

The polyamide block may also be a terpolyamide, a tetrapolyamide or a pentapolyamide or copolyamide having more than 5 different units. The units may be in the form of XY (diamine.diacid) or Z (lactam or aminoacid), for example X36/X1Y1/Z1/Z2, X36/X1Y1/X2Y2/Z1, X36/X1Y1/X2Y2/Z1/Z2, 36Y/X1Y1/Z1/Z2, 36Y/X1Y1/X2Y2/Z1, 36Y/X1Y1/X2Y2/Z1/Z2.

As examples copolyamide having 2 or more different units, mention may be made of PA 11/536, PA 11/1036, PA 11/636, PA 11/1236, PA 6/536, PA 6/1036, PA 6/636, PA 6/1236, PA 12/536, PA 12/1036, PA 12/636, PA 5.36/10.36, PA 536/636, PA 536/1236, PA 1036/636, PA 1036/1236, PA 636/1236, PA 11/12/6, PA 11/6/1236, PA 6/11/1036, PA 536/1036/6, and PA 12/536/636, preferably PA 11/1036.

According to another embodiment, the aliphatic dicarboxylic acid and/or diamine comprising 36 carbon atoms may be present as chain limiter of the polyamide blocks. The polymer chain may be illustrated as follows : -36-PA-36.

According to this embodiment, the polyamide blocks may comprise PA XY (diamine.diacid), PA Z (lactam or aminoacid), or the copolymer thereof, with X, Y and Z being defined above.

Preferably, the polyamide blocks are chosen among PA 6, PA 11, PA 12, PA 536, PA 1036, PA 636, PA1136, PA 1236, PA 366, PA 11/1036, PA 1012/1036, PA 1010/1036, PA 610/636, PA 612/636, PA 613/636, PA 69/636.

Advantageously, the repeating units of the polyamide blocks of the copolymer according to the invention have a mean carbon content of greater than or equal to 7.

The term "mean carbon content of the repeating units" means the mean of the numbers of carbon atoms of each repeating unit present in the polyamide blocks of the copolymer, weighted by the molar proportion of said repeating unit relative to the total amount of polyamide blocks. For example, for a PA X/Y as defined above comprising a mol % of PA X and b mol % of PA Y (a %+b % representing 100 mol % of the polyamide), the mean carbon content is: $(a \times X + b \times Y)/100$. When the polyamide blocks comprise a single repeating unit, as in the case of a block of PA X or of a block of PA X.Y as defined above, the mean carbon content of the repeating units of the polyamide blocks is equal to the number of carbon atoms of said repeating unit, given that a polyamide repeating unit contains, in a known manner, only one amide function. In the case of a PA X block, the number of carbon atoms of the repeating unit is X. In the case of a PA X.Y block, the number of carbon atoms of the repeating unit is $(X+Y)/2$ since the unit X.Y comprises two amide functions.

Preferably, the mean carbon content of the repeating units of the polyamide blocks of the copolymer according to the invention is from 8 to 14, more preferentially from 8 to 25, and most preferably from 10 to 25.

The number-average molar mass of the polyamide blocks in the copolymer according to the invention is preferably from 400 to 20 000 g/mol, more preferably 500 to 10 000 g/mol, and even more preferably 600 to 2500 g/mol. In certain embodiments, the number-average molar mass of the rigid polyamide blocks in the copolymer is from 400 to 500 g/mol, or from 500 to 1000 g/mol, or from 1000 to 1500 g/mol, or from 1500 to 2000 g/mol, or 2000 to 2500 g/mol, or 2500 to 3000 g/mol, or 3000 to 3500 g/mol, or 3500 to 4000 g/mol, or 4000 to 5000 g/mol, or from 5000 to 6000 g/mol, or from 6000 to 7000 g/mol, or from 7000 to 8000 g/mol, or from 8000 to 9000 g/mol, or from 9000 to 10 000 g/mol, or from 10 000 to 11 000 g/mol, or from 11 000 to 12 000 g/mol, or from 12 000 to 13 000 g/mol, or from 13 000 to 14 000 g/mol, or from 14 000 to 15 000 g/mol, or from 15 000 to 16 000 g/mol, or from 16 000 to 17 000 g/mol, or from 17 000 to 18 000 g/mol, or from 18 000 to 19 000 g/mol, or from 19 000 to 20 000 g/mol.

The number-average molar mass is set by the content of chain limiter. It may be calculated according to the equation:

$$M_n = n_{monomer} \times MW_{repeating\ unit} / n_{chain\ limiter} + MW_{chain\ limiter}.$$

In this formula, $n_{monomer}$ represents the number of moles of monomer, $n_{chain\ limiter}$ represents the number of moles of the chain limiter (for example diacid) in excess, $MW_{repeating}$ unit represents the molar mass of the repeating unit, and $MW_{chain\ limiter}$ represents the molar mass of the limiter (for example diacid) in excess. The number-average molar mass of the polyamide blocks can be measured before the copolymerization of the blocks by gel permeation chromatography (GPC). The number-average molar mass of the polyol blocks may be determined by measuring the hydroxyl number.

*Flexible block*

The term "flexible block" means a block with a glass transition temperature (Tg) of less than or equal to 0° C. The glass transition temperature may be determined by differential scanning calorimetry, according to the standard ISO 11357-2 Plastics-Differential scanning calorimetry (DSC) Part 2.

The flexible blocks of the copolymer comprises blocks derived from polyethylene glycol (PEG).

In certain embodiments, the flexible blocks of the copolymer according to the invention may consist of blocks derived from PEG.

Alternatively, the flexible blocks of the copolymer may contain at least one other block in addition to the blocks derived from PEG.

In certain embodiments, the flexible block of the copolymer comprises at least 50% by weight, preferably at least 60% by weight, or even more preferably at least 80% by weight of blocks derived from PEG, relative to the total weight of the flexible block.

The flexible blocks of the copolymer may also comprise, in addition to the blocks derived from PEG, one or more other polyethers and/or polyesters and/or polysiloxanes and/or polydimethylsiloxanes (or PDMS) and/or polyolefins and/or polycarbonates. Possible flexible blocks are described, for example, in French patent application FR 2941700 A1, from page 32 line 3 to page 33 line 8, from page 34 line 16 to page 37 line 13 and on page 38 lines 6 to 23.

Preferably, this other block is a polyether block other than a block derived from PEG and/or a polyester block.

The copolymers may comprise in their chain several types of polyethers other than a block derived from PEG, the corresponding copolyethers possibly being block or random copolyethers.

As polyether blocks other than a block derived from PEG, which are suitable for the invention, mention may be made of blocks derived from PPG (polypropylene glycol) consisting of propylene oxide units, blocks derived from PO3G (polytrimethylene glycol) consisting of polytrimethylene glycol ether units and blocks derived from PTMG (polytetramethylene glycol) consisting of tetramethylene glycol units, also called polytetrahydrofuran, or any combination thereof. Particularly preferably, the polyether block is a block derived from polypropylene glycol and/or from polytetrahydrofuran.

It is also possible to use, as polyether other than PEG, blocks obtained by oxyethylation of bisphenols, for instance bisphenol A. These latter products are notably described in EP 613919.

The polyether blocks may also consist of ethoxylated primary amines. As examples of ethoxylated primary amines, mention may be made of the products of formula:

$$H-(OCH_2CH_2)_m-N((CH_2)_xCH_3)-(CH_2CH_2O)_n-H$$

in which m and n are integers between 1 and 20 and x is an integer between 8 and 18. These products are commercially available, for example, under the brand name Noramox® from the company Arkema and under the brand name Genamin® from the company Clariant.

The flexible blocks may further comprise polyoxyalkylene polyether blocks bearing $NH_2$ chain ends, such blocks being obtainable by cyanoacetylation of aliphatic $\alpha,\omega$-dihydroxylated polyoxyalkylene blocks known as polyetherdiols. More particularly, the commercial products Jeffamine or Elastamine may be used (for example Jeffamine® D400, D2000, ED 2003, XTJ 542, which are commercial products from the company Huntsman, also described in JP 2004/346274, JP 2004/352794 and EP 1482011).

The polyetherdiol blocks may be either used in unmodified form and copolycondensed with polyamide blocks bearing carboxylic end groups, or are aminated to be converted into polyetherdiamines and condensed with polyamide blocks bearing carboxylic end groups.

The number-average molar mass of the flexible blocks is preferably from 200 to 6000 g/mol, more preferably from 500 to 3000 g/mol, and even more preferably from 600 to 2000 g/mol. In certain embodiments, the number-average molar mass of the flexible blocks is from 200 to 500 g/mol, or from 500 to 800 g/mol, or from 800 to 1000 g/mol, or from 1000 to 1500 g/mol, or from 1500 to 2000 g/mol, or from 2000 to 2500 g/mol, or from 2500 to 3000 g/mol, or from 3000 to 3500 g/mol, or from 3500 to 4000 g/mol, or from 4000 to 4500 g/mol, or from 4500 to 5000 g/mol, or from 5000 to 5500 g/mol, or from 5500 to 6000 g/mol.

The number-average molar mass of the flexible blocks can be measured as described above before the copolymerization of the blocks by gel permeation chromatography (GPC). The number-average molar mass of the polyol blocks may be determined by measuring the hydroxyl number.

*Copolymers*

The copolymer according to the invention may be a linear or branched copolymer. For example, the copolymer may be a branched copolymer in which the branchings are made by a polyol residue with a functionality of greater than 2 (i.e. the polyol includes at least three hydroxyl groups) bonding polyamide blocks of the copolymer.

The melting point of the copolymer of the invention is equal to or higher than 80°C, preferably higher than 80°C. Advantageously, the melting point of the copolymer of the invention is equal to or higher than 85°C, preferably equal to or higher than 90°C, more preferably equal to or higher than 100°C. The melting point may be determined by differential scanning calorimetry, according to the standard ISO 11357-3 Plastics-Differential scanning calorimetry (DSC) Part 3, during the heating stage at a speed of 20°C/min.

The copolymers according to the present invention may include copolymers comprising three, four (or even more) different blocks chosen from those described in the present description, provided that these blocks include at least polyamide blocks and blocks derived from polyethylene glycol.

For example, the copolymer according to the invention may be a segmented block copolymer comprising three different types of blocks (or "triblock" copolymer), which results from the condensation of several of the blocks described above. Said triblock may be, for example, a copolymer comprising a polyamide block, a flexible block derived from PEG and a polyester block, or a copolymer comprising a polyamide block, a flexible block derived from PEG and a block derived from PTMG.

In a particularly advantageous manner, the copolymers according to the invention comprises, or consists of, polyamide blocks of PA 11, PA 10.36, PA 11/1036, or PA 366, flexible blocks derived from PEG, or any mixture or combination thereof, provided that the polyamide blocks contain from 30 to 75% by weight, preferably from 30 to 70% by weight of aliphatic dicarboxylic acid or diamine comprising 36 carbon atoms, relative to the total weight of polyamide blocks .

Copolymers that are particularly preferred in the context of the invention are copolymers including blocks (or consisting of blocks):

- PA 11 and blocks derived from PEG, said PA 11 containing C36 dicarboxylic acid as a chain limiter;
- PA 1036 and blocks derived from PEG;
- PA 11/1036 and blocks derived from PEG;
- PA 366 and blocks derived from PEG.

In these copolymers, the polyamide blocks contains from 30 to 75% by weight of C36 dicarboxylic acid (in the case of PA 11/PEG (as a chain limiter), PA 1036/PEG, PA 11/1036/PEG) or C36 diamine (in the case of PA 365/PEG), relative to the total weight of polyamide blocks, preferably from 30 to 70% by weight, and particularly from 35 to 70% by weight.

Advantageously, the copolymers PA 1036/PEG and PA 11/1036/PEG may also comprise a chain limiter, preferably a C36 dicarboxylic acid. Likewise; the polymer PA 365/PEG may also comprise a chain limiter, preferably a C6 dicarboxylic acid.

In the copolymer according to the invention, the weight proportion of the polyamide blocks may be from 15 to 60%, preferably from 20 to 50%, more preferably 30 to 50%, relative to the total weight of the copolymer, and the weight proportion of the flexible blocks may be of from 40 to 85%, preferably from 30 to 60%, more preferably from 35 to 60%, relative to the total weight of the copolymer.

The weight proportions of the polyamide blocks and of the flexible blocks in the copolymer may be determined by DSC or NMR analysis.

In the copolymer according to the invention, the number-average molecular weight of the polyamide blocks may be from 400 to 20 000 g/mol, preferably 500 to 10 000 g/mol, more preferably 600 to 2500 g/mol, and the number-average molecular weight of the flexible blocks may be from 200 to 6000 g/mol, preferably 500 to 3000 g/mol, more preferably 600 to 2000 g/mol.

*Synthesis of Copolymer*

The invention also relates to a process for preparing the copolymer as described above.

In a general and known manner, the polymers containing polyamide blocks and flexible blocks may be prepared according to a "two-step" preparation process (comprising a first step of synthesis of the polyamide blocks then a second step of condensation of the polyamide blocks and the flexible blocks) or by a "one-step" preparation process.

In certain embodiments, the copolymer is prepared according to a two-step process. This process comprises the following steps:

- synthesizing the polyamide blocks from polyamide precursors,
- adding the flexible blocks, and
- condensing the polyamide blocks and the flexible blocks.

Alternatively, the copolymer according to the invention may be prepared according to a one-step process, involving mixing the flexible blocks with polyamide precursors and a chain-limiting diacid.

The general method for the two-step preparation (that is to say, a first step of synthesis of the polyamide blocks then a second step of condensation of the polyamide and flexible polyether blocks) of the copolymers containing polyamide blocks and flexible polyether blocks (also called PEBA according to the IUPAC, or polyether-block-amide) bearing ester bonds between the PA blocks and the PE blocks is known and described, for example, in FR 2846332. The general method for preparing PEBA copolymers bearing amide bonds between the PA blocks and the PE blocks is known and described, for example in EP 1482011. The flexible polyether blocks may also be mixed with polyamide precursors and a chain-limiting diacid to prepare polymers containing polyamide blocks and flexible polyether blocks having randomly distributed units (one-step process).

Irrespective of the preparation method (in one step or two steps), the copolymers bearing polyamide blocks and flexible blocks result from the polycondensation of polyamide blocks bearing reactive ends with flexible blocks bearing reactive ends, such as, inter alia, the polycondensation of:

1) polyamide blocks bearing diamine chain ends with flexible blocks bearing dicarboxylic chain ends;

2) polyamide blocks bearing dicarboxylic chain ends with flexible blocks bearing diamine chain ends, obtained, for example, by cyanoethylation and hydrogenation of aliphatic $\alpha,\omega$-dihydroxylated polyoxyalkylene blocks known as polyetherdiols;

3) polyamide blocks bearing dicarboxylic chain ends with polyetherdiols, the products obtained being, in this particular case, polyetheresteramides.

The polyamide blocks bearing dicarboxylic chain ends originate, for example, from the condensation of polyamide precursors in the presence of a chain-limiting dicarboxylic acid. The polyamide blocks bearing diamine chain ends originate, for example, from the condensation of polyamide precursors in the presence of a chain-limiting diamine.

When the copolymer is a branched copolymer, it may be prepared by adding, during its synthesis, one or more polyols including at least three hydroxyl groups as branching agent. In the one-step or two-step processes described above, the polyol is added with the polyamide precursors. Advantageously, the polyol is added in an amount ranging from 0.01% to 10% by weight, preferably from 0.01% to 5% by weight, more preferably from 0.05% to 0.5% by weight, relative to the total weight of polyol, polyamide precursors and flexible blocks. The addition of a polyol including at least three hydroxyl groups brings about bridging bonds connecting together the polyamide blocks of the copolymer, preferably via ester bonds. The polyol may notably be:

- a monomeric polyol, notably a monomeric aliphatic triol such as glycerol, trimethylolpropane, pentaerythritol, and/or
- a polymer polyol, notably a triol containing polyether chains, a polycaprolactone triol, a mixed polyether-polyester polyol including at least three hydroxyl groups.

Advantageously, the polyol is chosen from: pentaerythritol, trimethylolpropane, trimethylolethane, hexanetriol, diglycerol, methylglucoside, tetraethanol, sorbitol, dipentaerythritol, cyclodextrin, polyether polyols including at least three hydroxyl groups, and mixtures thereof. The weight-average molar mass of the polyol is preferably not more than 3000 g/mol, more preferentially not more than 2000 g/mol.

*Composition*

The invention also relates to a composition, comprising at least one copolymer as described above.

The composition of the invention further comprises at least one additive selected from coloring agents, UV stabilizers, anti-aging agents, antioxidants, fluidizing agents, anti-abrasion agents, mold-release agents, stabilizers, plasticizers, impact modifiers, surfactants, brighteners, fillers, fibers, waxes and mixtures thereof.

In certain embodiments, the composition may comprise from 0.01% to 30% by weight of such additive(s) relative to the total weight of the membrane.

*Membrane*

The invention also relates to the use of the copolymer as described above or the composition described above as a membrane for gas separation.

The invention also relates to a membrane (or film) for gas separation, comprising a copolymer as described above or a composition as described above.

The term "membrane" means any layer, including a membrane in the form of a flat film and a membrane in the form of a hollow fiber.

The membrane may be a gas separation membrane for recovering greenhouse gases, in particular $CO_2$. The gas separation may comprise separating $CO_2$ from $N_2$ in post-combustion process.

The thickness of the membrane according to the invention is preferably from 0.1 to 500 $\mu$m, more preferably 0.1 to 250 $\mu$m. Advantageously, the thickness of the membrane is less than 20 $\mu$m, and more advantageously less than 10 $\mu$m. For example, the thickness of the membrane may be from 0.1 to 0.5 $\mu$m, or from 0.5 to 1 $\mu$m, or from 1 to 2 $\mu$m, or from 2 to 5 $\mu$m, or from 5 to 10 $\mu$m, or from 10 to 20 $\mu$m, or from 20 to 30 $\mu$m, or from 30 to 40 $\mu$m, or from 40 to 50 $\mu$m, or from 50 to 60 $\mu$m, or from 60 to 70 $\mu$m, or from 70 to 80 $\mu$m, or from 80 to 90 $\mu$m, or from 90 to 100 $\mu$m, or from 100 to 200 $\mu$m, or from 200 to 300 $\mu$m, or from 300 to 400 $\mu$m, or from 400 to 500 $\mu$m. The thickness of the membrane may be determined according to a conventional method known in the art. For example, an optical or electron microscope may be used to capture high-resolution images of a cross-section of the hollow-fiber membrane, and the thickness may be measured directly from the images using a conventional image analysis software.

In certain embodiments, the membrane consists essentially of, or consists of, a copolymer as described above or a composition as described above.

The membrane may also comprise one or more additives chosen from the group consisting of UV stabilizers, crosslinking agents, pigments, metal oxides, zeolites, flame retardants, UV protectants, optical brighteners, thermal stabilizers, lubricants, antioxidants, flow improvers, flowability improvers, film-forming agents, fillers, filming aids, gums, semi-crystalline polymers, preservatives, anti-bacterial reinforcement agents, fibres such as glass fiber, fillers such as talc, coloring agents, anti-aging agents, antioxidants, anti-abrasion agents, stabilizers, plasticizers, impact modifiers, surfactants, brighteners, waxes and mixtures thereof, preferably in a mass amount of from 0.01% to 30% by weight relative to the total weight of the membrane.

In certain embodiments, the membrane may comprise two or more copolymers as described above or two or more compositions as described above.

The membrane according to the invention may be a composite membrane, that is to say a membrane comprising at least one polymer layer as described above, deposited on at least one porous, microporous or nanoporous support layer, such as nonwoven polypropylene or any polymeric framework.

*Process for preparing a membrane*

The membrane according to the invention may be prepared in a known manner by any melt process (for example, by flat film extrusion ("extrusion cast") or by extrusion coating on a support), or in a solvent process (for example by deposition in the solvent/evaporation process ("solvent cast" or "'spinning process").

The invention thus relates to a process for preparing the membrane as described above.

The process comprises the following steps of:

- supplying a copolymer as described above or a composition as described above,
- dissolving the copolymer or the composition in a solvent to form a solution,
- depositing the solution on a substrate, and
- evaporating off the solvent.

The membrane may be manufactured by a process comprising the following steps:

- supplying a copolymer as described above;
- melting the copolymer;
- forming a molten copolymer membrane;
- solidifying the membrane.

The above processes by solvent cast or extrusion cast may be advantageously used when the resulting membrane is in the form of a flat film.

When the membrane is a composite membrane, the polymer layer may be deposited on the support layer by extrusion coating, extrusion lamination, adhesive lamination, deposition by solvent/evaporation ("solvent cast"), atomization ("spray coating"), welding or sealing.

The invention relates to another process for preparing the membrane as described above.

The process comprises the following steps of:

- supplying a polymer solution comprising the copolymer as described above or the composition as described above dissolved in a solvent,
- -supplying a bore fluid,
- co-extruding the polymer solution and the bore fluid downwardly into a coagulation bath, and
- recovering the membrane solidified in the coagulation bath,
- drying the recovered membrane by solvent exchange or by lyophilization.

This process may be advantageously used when the resulting membrane is in the form of a hollow fiber.

**EXAMPLE**

The examples that follow illustrate the invention without limiting it.

*Preparation of copolymer compositions*

Compositions comprising a copolymer containing polyamide blocks and flexible PEG blocks, and an additive were prepared according to the composition shown in the following table.

A11 means 11-aminoundecanoic acid.

DA10 means decanediamine.

DC36 means diacid containing 36 carbon atoms is sold under the trademark Pripol® 1009 by the company Cargill.

PEG means PolyEthylenGlycol sold under the trademark Pluriol® E1500 by the company BASF.

Irganox® 1010 is an anti-oxidant sold by BASF.

Zr(OBu)4 is a catalyst.

The PEBAs No. 1 and 2 correspond to copolymers of the invention.

The table 1 below shows the input expressed in grams for each reactant:

Table 1

| PEBA No. | Structure | A11 | DA10 | DC36 | PEG | Irganox 1010 | Zr(OBu)$_4$ |
|---|---|---|---|---|---|---|---|
| 1 | 11/PEG | 953 | - | 1162 | 2970 | 10 | 17.7 |
| 2 | 11/10.36/PEG | 552 | 384 | 2069 | 2045 | 10 | 17.7 |

The table 2 below shows the characterization of PEBA copolymer:

Table 2

| PEBA No. | Structure | Mn-PA | Mn-PEG | Chain limiter | C36/ PA | Tm (°C) |
|---|---|---|---|---|---|---|
| 1 | 11/PEG | 1000 | 1500 | DC36 | 57% | 122 |
| 2 | 11/10.36/PEG | 2100 | 1500 | DC36 | 70% | 96 |

In Table 2 :

Mn-PA corresponds to the number-average molecular weight of the polyamide blocks.

Mn-PE corresponds to the number-average molecular weight of the polyethylene glycol (PEG).

C36/PA corresponds to the weight ratio of the C36 aliphatic dicarboxylic acid or diamine to the total weight of polyamide blocks.

Tm corresponds to the melting point (°C) of the copolymer.

*Preparation of membranes*

Using the PEBA No. 1 and 2, flat-film membranes were prepared by solvent cast.

Specifically, a polymer solution of 5 wt% was dissolved in trichloromethane at room temperature for 24 h hours. The solution was filtered through 0,45 $\mu$m filter and cast in a glass petri dish to obtain a membrane in the form of a flat film having a thickness of 48 $\mu$m for PEBA 1 and 88 $\mu$m for PEBA 2.

The solvent was allowed to evaporate in a solvent-saturated atmosphere under a flow of N$_2$ in a container for 24 hours at room temperature and then under vacuum at 50°C for additional 24 hours.

The resulting membranes were easily removed from the petri dish by peeling.

It was confirmed that the PEBA No. 1 and 2 exhibited good solubility in organic aprotic solvents, such as NMP, DMAc, while it was insoluble in chemicals or non-solvents used for membrane washing (e.g., methanol, acrylonitrile, dimethoxymethane, hexane, and water).

The membrane made of the copolymer PEBA 1 and PEBA 2 are compared with membrane made of different material.

PEBA 3 is made of PA6/PEG and does not contain a dimer fatty acid or dimer fatty diamine comprising 36 carbon atoms.

CA is a material made of cellulose acetate (Mw = 100 000 g/mol), supplied by Sigma Aldrich.

PS is a polysulfone supplied by Solvay under the commercial name : Udel® P-3500).

P84 is a co-polyimide supplied by Ensinger Sintimid GmbH, it is made of 3,3'4,4'- benzophenone tetracarboxylic dianhydride with 80% methylphenylenediamine and 20% methylene diamine co-polyimide.

*Results*

*Permeability evaluation*

The term "permeability" of the membrane refers to a measure of how easily a substance (in this application, gas) can pass through the membrane, expressed in Barrer, which represents the rate of a gas flow passing through the membrane having a thickness driven by a given pressure at a given temperature.

Specifically, the permeability in Barrer can be calculated according to the following formula :

$$10^{-10} \times ((cm^3_{STP} \times cm)/(s \times cm^2 \times cmHg))$$

In the formula, the "$cm^3_{STP}$" corresponds to standard cubic centimeter (a unit of amount of gas), representing the number of gas molecules (mol) that would occupy one cubic centimeter at standard temperature and pressure, as calculated via the ideal gas law. The "cm" corresponds to the thickness of the membrane whose permeability is being evaluated. Thus, the "$cm^3_{STP}/(cm^2 \times s^1)$" ($cm^3_{STP} \cdot cm^{-2} s^{-1}$) corresponds to the flux of gas through the membrane, and the cmHg to the pressure drop across the material.

The flux of gas through the membrane at 35°C and 3 bars may be determined according to a gas permeability method. Specifically, a membrane may be placed in a permeation cell, and the upper surface of the membrane may be flushed with a test gas, and the lower surface of the membrane may be flushed with a carrier gas. The gas stream diffusing through the membrane in the lower part may be analyzed by gas chromatography.

*Selectivity evaluation*

The A/B selectivity of a membrane corresponds to the ratio of the permeability to a gas A of said membrane with respect to the permeability to another gas B of said membrane, measured at a temperature of 35°C and at a pressure of 3 bar(a).

The membranes were tested for their permeability and selectivity properties and the results are given below:

Table 3

|  | $CO_2$ Permeability (Barer) | $CO_2/N_2$ Selectivity | $CO_2/H_2$ Selectivity |
|---|---|---|---|
| PEBA 1 | 395.88 | > 30 | 7.46 |
| PEBA 2 | 342.77 | > 30 | 5.37 |
| Peba 3 | 110 | > 30 | n.d |
| CA | 15 | > 30 | n.d |
| PS | 6.34 | 30 | n.d |
| P84 | 1.74 | > 30 | n.d |

It is important to note that the membranes according to the invention had an excellent permeability and a good selectivity of $CO_2$ over $N_2$ and $H_2$, indicating that this polymer might be a better candidate for post-combustion $CO_2$ capture.

**Claims**

1. Copolymer containing semi-crystalline polyamide blocks and flexible blocks, wherein:

   - the semi-crystalline polyamide blocks contain from 30 to 75% by weight, preferably from 30 to 70% by weight of aliphatic dicarboxylic acid and/or diamine comprising 36 carbon atoms, relative to the total weight of polyamide blocks,
   - the flexible blocks comprise blocks derived from polyethylene glycol and,
   - the melting point of the copolymer of the invention is equal to or higher than 80°C, preferably higher than 80°C.

2. The copolymer according to claim 1, wherein the polyamide blocks comprise a unit X.36 or a unit 36.Y, wherein:

   - X designates a linear or branched aliphatic, cycloaliphatic or aromatic diamine containing x carbon atoms,
   - 36 designates an aliphatic dicarboxylic acid or an aliphatic diamine comprising 36 carbon atoms, and

- Y designates a linear or branched aliphatic, cycloaliphatic or aromatic dicarboxylic acid containing y carbon atoms.

3. The copolymer according to claim 1, wherein the aliphatic dicarboxylic acid and/or diamine comprising 36 carbon atoms is a chain limiter of the semi-crystalline polyamide blocks.

4. The copolymer according to any one of claims 1 to 3, wherein the polyamide blocks comprises unit of PA 6, PA 11, PA 12, PA 536, PA 1036, PA 636, PA 1136, PA 1236, PA 366, PA 11/1036, PA 1012/1036, PA 1010/1036, PA 610/636, PA 612/636, PA 613/636, PA 69/636.

5. The copolymer according to any one of claims 1 to 4, wherein:

   - the weight proportion of the polyamide blocks is of from 15 to 60%, preferably from 20 to 50%, more preferably 30 to 50%, relative to the total weight of the copolymer, and
   - the weight proportion of the flexible blocks is of from 40 to 85%, preferably from 30 to 60%, more preferably from 35 to 60%, relative to the total weight of the copolymer.

6. The copolymer according to any one of claims 1 to 5, wherein:

   - the number-average molecular weight of the polyamide blocks is from 400 to 20 000 g/mol, preferably 500 to 10 000 g/mol, more preferably 600 to 2500 g/mol, and
   - the number-average molecular weight of the flexible blocks is from 200 to 6000 g/mol, preferably 500 to 3000 g/mol, more preferably 600 to 2000 g/mol.

7. A composition, comprising:

   - at least one copolymer defined according to any one of claims 1 to 6; and
   - at least one additive selected from coloring agents, UV stabilizers, anti-aging agents, antioxidants, fluidizing agents, anti-abrasion agents, mold-release agents, stabilizers, plasticizers, impact modifiers, surfactants, brighteners, fillers, fibers, waxes and mixtures thereof.

8. The use of the copolymer defined in any one of claims 1 to 6 or the composition defined in claim 7 as a membrane for gas separation.

9. A membrane for gas separation, comprising the copolymer as claimed in any one of claims 1 to 6 or the composition of claim 7.

10. The membrane according to claim 9, wherein it has a thickness of from 0.05 to 500 $\mu$m, preferably 0.1 to 250 $\mu$m, more preferably a thickness of less than 20 $\mu$m, and even more preferably a thickness of less than 10 $\mu$m.

11. A process for preparing the membrane defined in claim 9 or 10, comprising the following steps of:

   - supplying the copolymer defined in claims 1 to 6 or the composition defined in claim 7,
   - dissolving the copolymer or the composition in a solvent to form a solution,
   - depositing the solution on a substrate, and
   - evaporating off the solvent.

12. A process for preparing the membrane defined in claim 9 or 10, comprising the following steps of:

   - supplying a polymer solution comprising the copolymer defined in claims 1 to 7 or the composition defined in claim 8 dissolved in a solvent,
   - -supplying a bore fluid,
   - co-extruding the polymer solution and the bore fluid downwardly into a coagulation bath, and
   - recovering the membrane solidified in the coagulation bath,
   - drying the recovered membrane by solvent exchange or by lyophilization.

Europäisches
Patentamt

European
Patent Office

Office européen
des brevets

# EUROPEAN SEARCH REPORT

**Application Number**

EP 23 30 7020

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 744 570 A (GEBBEN BERT [NL]) 28 April 1998 (1998-04-28) | 1-11 | INV. C08G69/34 |
| A | * column 10; examples X, XI * * column 5, line 24 - line 37 * | 12 | B01D71/56 C08G69/36 C08G69/40 |
| X | US 4 740 582 A (COQUARD JEAN [FR] ET AL) 26 April 1988 (1988-04-26) | 1-7 | C08L77/08 |
| A | * column 17 - column 18; example 4 * | 8-12 | |
| X | US 4 581 440 A (COQUARD JEAN [FR] ET AL) 8 April 1986 (1986-04-08) | 1-7 | |
| A | * column 10 - column 11; example 2 * | 8-12 | |
| X | US 3 839 245 A (SCHLOSSMAN I ET AL) 1 October 1974 (1974-10-01) | 1-11 | |
| A | * column 9; example 3 * | 12 | |

TECHNICAL FIELDS
SEARCHED (IPC)

C08G
B01D
C08L

The present search report has been drawn up for all claims

| Place of search | Date of completion of the search | Examiner |
|---|---|---|
| Munich | 12 April 2024 | Wohnhaas, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

             

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 30 7020

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2024

| Patent document cited in search report | | Publication date | Patent family member(s) | | Publication date |
|---|---|---|---|---|---|
| US 5744570 | A | 28-04-1998 | DE | 69630565 T2 | 16-09-2004 |
| | | | EP | 0761715 A1 | 12-03-1997 |
| | | | ES | 2210335 T3 | 01-07-2004 |
| | | | JP | H09118750 A | 06-05-1997 |
| | | | US | 5744570 A | 28-04-1998 |
| | | | US | 5989697 A | 23-11-1999 |
| US 4740582 | A | 26-04-1988 | AT | E60342 T1 | 15-02-1991 |
| | | | BR | 8601350 A | 02-12-1986 |
| | | | CA | 1267449 A | 03-04-1990 |
| | | | CN | 86100176 A | 22-04-1987 |
| | | | DK | 141186 A | 29-09-1986 |
| | | | EP | 0201434 A1 | 12-11-1986 |
| | | | ES | 8707559 A1 | 01-08-1987 |
| | | | ES | 8802433 A1 | 01-06-1988 |
| | | | FI | 861249 A | 29-09-1986 |
| | | | FR | 2579601 A1 | 03-10-1986 |
| | | | GR | 860153 B | 11-04-1986 |
| | | | JP | H0215576 B2 | 12-04-1990 |
| | | | JP | S61225213 A | 07-10-1986 |
| | | | KR | 860007301 A | 10-10-1986 |
| | | | PT | 82295 A | 01-04-1986 |
| | | | US | 4740582 A | 26-04-1988 |
| US 4581440 | A | 08-04-1986 | AT | E28882 T1 | 15-08-1987 |
| | | | BR | 8402928 A | 28-05-1985 |
| | | | CA | 1225768 A | 18-08-1987 |
| | | | DK | 313484 A | 29-12-1984 |
| | | | EP | 0130927 A1 | 09-01-1985 |
| | | | ES | 8503700 A1 | 01-03-1985 |
| | | | FI | 842593 A | 29-12-1984 |
| | | | FR | 2548196 A1 | 04-01-1985 |
| | | | GR | 82011 B | 12-12-1984 |
| | | | JP | H0229688 B2 | 02-07-1990 |
| | | | JP | S6020929 A | 02-02-1985 |
| | | | NO | 160927 B | 06-03-1989 |
| | | | PT | 78804 A | 01-07-1984 |
| | | | US | 4581440 A | 08-04-1986 |
| US 3839245 | A | 01-10-1974 | AT | 371493 B | 27-06-1983 |
| | | | BE | 797627 A | 01-10-1973 |
| | | | CH | 596251 A5 | 15-03-1978 |
| | | | DE | 2315753 A1 | 11-10-1973 |
| | | | ES | 413122 A1 | 16-06-1976 |
| | | | FR | 2178205 A1 | 09-11-1973 |
| | | | GB | 1432011 A | 14-04-1976 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 23 30 7020

This annex lists the patent family members relating to the patent documents cited in  the above-mentioned European search report.
The members are as contained in the European Patent Office EDP file on
The European Patent Office is in no way liable for these particulars which are merely given for the purpose of information.

12-04-2024

| Patent document cited in search report | Publication date | Patent family member(s) | | Publication date |
|---|---|---|---|---|
| | | IT | 981782 B | 10-10-1974 |
| | | JP | S498472 A | 25-01-1974 |
| | | LU | 67332 A1 | 03-10-1973 |
| | | NL | 7304433 A | 02-10-1973 |
| | | US | 3839245 A | 01-10-1974 |
| | | ZA | 732089 B | 27-11-1974 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018222255 A
- US 20220315701 A
- FR 2941700 A1
- EP 613919 A
- JP 2004346274 A
- JP 2004352794 A
- EP 1482011 A
- FR 2846332